# EUROPEAN PATENT SPECIFICATION

(11) **EP 1 600 326 B1**
(45) Date of publication and mention of the grant of the patent: **30.06.2010**
(21) Application number: 05009092.7
(22) Date of filing: 26.04.2005
(51) Int. Cl.: B60N 3/02, B60N 2/46, B60N 2/01, B60N 3/06, B62K 5/00, B62K 5/02, B60K 15/063, B62J 25/00

(54) **Vehicle with a seat and transversally extending grab handle for the passenger**
Fahrzeug mit einem Sitz und einem trasversalen Haltegriff für den Insassen
Véhicule avec un siège et une poignée de maintien transversale pour le passager

(30) Priority: 24.05.2004 JP 2004153862; 04.03.2005 JP 2005060954
(43) Date of publication of application: 30.11.2005
(73) Proprietor: HONDA MOTOR CO., LTD., Tokyo (JP)
(72) Inventor: Fufihara, Kiyotaka, 4-1, Chuo 1-chome, Wako-shi, Saitama (JP); Sugioka, Koichi, 4-1, Chuo 1-chome, Wako-shi, Saitama (JP); Saito, Toshikazu, 4-1, Chuo 1-chome, Wako-shi, Saitama (JP); Seiji, Tatsuya, 4-1, Chuo 1-chome, Wako-shi, Saitama (JP)
(74) Representative: Rupp, Christian

(56) References cited:
- WO-A-03/042026
- FR-A- 2 814 993
- GB-A- 1 126 166
- US-A- 5 320 415
- US-A- 5 733 010
- PATENT ABSTRACTS OF JAPAN vol. 2003, no. 12, 5 December 2003 (2003-12-05) & JP 2004 067079 A (HONDA MOTOR CO LTD), 4 March 2004 (2004-03-04)
- PATENT ABSTRACTS OF JAPAN vol. 2003, no. 01, 14 January 2003 (2003-01-14) & JP 2002 255070 A (HONDA MOTOR CO LTD), 11 September 2002 (2002-09-11)

## Description

The present invention relates to an improvement technique for a vehicle having seats mounted at front and rear thereof.

Vehicles of various types are known, in which a rear portion seat is provided rearward of a front portion seat. (See, for example, Patent Documents 1 and 2.)
[Patent Document 1]
Japanese Patent Laid-open No. 2004-67079
[Patent Document 2]
Japanese Patent Laid-open No. 2002-255070

A conventional vehicle according to Patent Document 1, considered as closest prior art for a vehicle according to the preamble of claim 1, is a three-seater automobile having a rear portion seat mounted rearward of a front portion seat.
The rear portion seat includes right and left seating portions on both sides thereof. The right and left seating portions are offset sideways relative to the front portion seat. Each of the two right and left rear portion passengers sitting on the rear portion seat is to place his or her both feet aligned beside the front portion seat.

A conventional vehicle according to Patent Document 2 is, on the other hand, a two-seater motorcycle having a rear portion seat mounted rearward of a front portion seat. The rear portion seat includes armrests provided on the right and left of a backrest. These armrests can be brought into a use position, in which the armrests extend forwardly from the backrest, or a storage position, in which the armrests are lowered vertically down.

In the conventional vehicle according to Patent Document 1 or Patent Document 2, it is preferable that a riding posture of the rear portion passenger be retained more stably. In the conventional vehicle according to Patent Document 2, it is simply arranged that the armrests of the rear portion seat are vertically rotatable.

Further, in the art disclosed in Patent Document 2, the armrests of the rear portion seat are not designed to be locked. It is therefore possible that the armrests in the use position, in which the armrests extend forwardly from the backrest, move.

It is therefore an object of the present invention to provide a technique for ensuring easy egress and ingress for rear portion passengers sitting on seating portions for a rear portion seat that are offset sideways relative to a front portion seat, while allowing the rear portion passengers to support easily a forward force when the forward force is applied to the rear portion passengers during sudden braking of a vehicle or in a similar situation.

A first aspect of the present invention provides a vehicle including a front portion seat and a rear portion seat disposed rearward of the front portion seat, the rear portion seat including a seating portion offset sideways relative to the front portion seat. The rear portion seat includes a side support member disposed on a side of the rear portion seat. The vehicle is further characterized in that the side support member includes a side grip capable of being raised or lowered so as to be extendable inwardly a vehicle body.

According to a second aspect of the present invention, the side grip is rotatably supported on a first base member disposed in the side support member and a second base member disposed in a base portion of the side grip is lockable relative to the first base member.

According to a third aspect of the present invention, the second base member is swingably journaled via a shaft on the first base member and a locking member capable of locking a protruded portion included in the second base member is clamped between the first base member and the second base member.

According to a fourth aspect of the present invention, an elastic member is interposed between the locking member and the first base member.

According to a fifth aspect of the present invention, the locking member is supported on the shaft via a slot and supported on both side walls included in the first base member so as to be movable along the both side walls.

According to a sixth aspect of the present invention, the side grip is raised or lowered about a rotational shaft that is inclined downwardly toward a rear.

According to a seventh aspect of the present invention, the rear portion seat includes a backrest that is inclined rearwardly.

According to an eighth aspect of the present invention, a footrest portion for a rear portion passenger, on which the rear portion passenger sitting on the rear portion seat places feet, is disposed on a side of the seat, and the footrest portion for the rear portion passenger is inclined upwardly toward a front.

According to a ninth aspect of the present invention, the footrest portion for the rear portion passenger is provided as a pair of right and left footrest portions and a fuel tank is disposed between the pair of the footrest portions for rear portion passengers.

According to a tenth aspect of the present invention, a center grip is disposed between the front portion seat and the rear portion seat.

According to the first aspect of the present invention, the rear portion seat including the seating portion offset sideways relative to the front portion seat is disposed rearward of the front portion seat, the side support member is disposed on a side of the rear portion seat, and the side grip is disposed on the side support member so as to be capable of being raised or lowered so as to be extendable inwardly the vehicle body. This helps the rear portion passengers maintain a good riding posture with the help of the side grips during sudden braking of the vehicle or a related similar condition. Further, easy egress and ingress is secured for the rear portion passengers, since the side grips can be raised.

According to the second aspect of the present invention, the side grip is supported on the first base member disposed in the side support member and the second base member disposed in the base portion of the side grip is lockable relative to the first base member.
Since the second base member is lockable relative to the first base member, an arrangement may be made such that the second base member is lockable when the side grip is lowered inwardly. This allows the side grip to be stably held in position in the lowered position thereof.

According to the third aspect of the present invention, the second base member is swingably journaled via the shaft on the first base member and the locking member capable of locking the protruded portion included in the second base member is clamped between the first base member and the second base member. The protruded portion of the second base member can therefore be locked by the locking member.

While being swingable, the protruded portion of the second base member is lockable by the locking member. Locking and unlocking of the side grip using the locking member can be accomplished by disposing the protruded portion at a preferable position relative to the locking member and devising the shape of the locking member.

According to the fourth aspect of the present invention, the elastic member is interposed between the locking member and the first base member. Further, the elastic member urges the locking member which, in turn, urges the protruded portion of the second base member. This arrangement allows urge to the protruded portion of the second base member to be released, thus unlocking the side grip, only when the locking member is pulled with the side grip at the lowered position.
The arrangement, in which the side grip is unlocked only when the locking member is pulled with the side grip lowered, permits positive locking operation, while maintaining good operability of the side grip.

According to the fifth aspect of the present invention, the locking member is supported on the shaft via the slot and supported on both side walls included in the first base member so as to be movable along the both side walls. This arrangement allows the locking member to be moved smoothly. The arrangement permitting the locking member to move smoothly makes it even easier to perform locking and unlocking operations of the side grip.

According to the sixth aspect of the present invention, the rotational shaft of the side grip is inclined downwardly toward the rear. If an upward thrust load acts from below on the side grip extending toward the inside of the vehicle body, the upward thrust load can be dispersed for an inclined angle of the rotational shaft. Accordingly, the side grip can be easily prevented from being moved upward by the upward thrust load.

According to the seventh aspect of the present invention, the backrest of the rear portion seat is inclined rearwardly. The posture of the rear portion passengers sitting on the rear portion seat can therefore be inclined slightly rearwardly when the rear portion passengers lean against the backrests. Consequently, the rear portion passengers can be even further prevented from moving forward.

According to the eighth aspect of the present invention, the footrest portion for the rear portion passenger, on which the rear portion passenger sitting on the rear portion seat places feet, is inclined upwardly toward the front. The rear portion passengers can be prevented from moving forward even more positively during sudden braking or in a similar situation. Further, the riding posture of the rear portion passengers can be retained even more stably.

According to the ninth aspect of the present invention, the fuel tank is disposed between a pair of right and left footrest portions for rear portion passengers. The sides of the fuel tank can therefore be protected with the footrest portions for rear portion passengers.

According to the tenth aspect of the present invention, the center grip is disposed between the front portion seat and the rear portion seat. Accordingly, even if a passenger of a small figure, such as a child or the like, sits on a central portion of the rear portion seat, the passenger can grip the center grip disposed before the rear portion seat. Consequently, the riding posture of the passenger can be stably retained with the center grip.

FIG. 1 is a left side elevational view showing a vehicle according to the present invention.
FIG. 2 is a plan view showing the vehicle according to the present invention.
FIGS. 3A and 3B are views showing the structure of a left side support member according to the present invention.
FIGS. 4A and 4B are plan views showing the structure of the left side support member according to the present invention.
FIG. 5 is a view for explaining the operation of a side grip according to the present invention.
FIG. 6 is a view showing the structure of a center grip according to the present invention.
FIG. 7 is a view showing another embodiment of the embodiment shown in FIG. 3.
FIG. 8 is a cross sectional view showing the side grip support portion shown in FIG. 7.
FIG. 9 is a view for explaining a locking mechanism of the side grip support portion shown in FIG. 7 and an operation thereof (for starting the operation of raising the side grip).
FIG. 10 is a view for explaining the locking mechanism of the side grip support portion shown in FIG. 7 and an operation thereof (for completing the operation of raising the side grip).
FIG. 11 is a view showing another embodiment of the embodiment shown in FIG. 9.
FIG. 12 is a view showing another embodiment of the embodiment shown in FIG. 10.

The best mode for carrying out the present invention will be described with reference to the accompanying drawings. In the description given hereunder, the terms "front," "rear," "left," "right," "upper," and "lower" are used to indicate the corresponding direction as viewed by a rider. In the accompanying drawings, "Fr" represents forward, "Rr" represents rearward, "L" represents leftward, "R" represents rightward, and "CL" represents a vehicle width center (center of vehicle body), respectively.

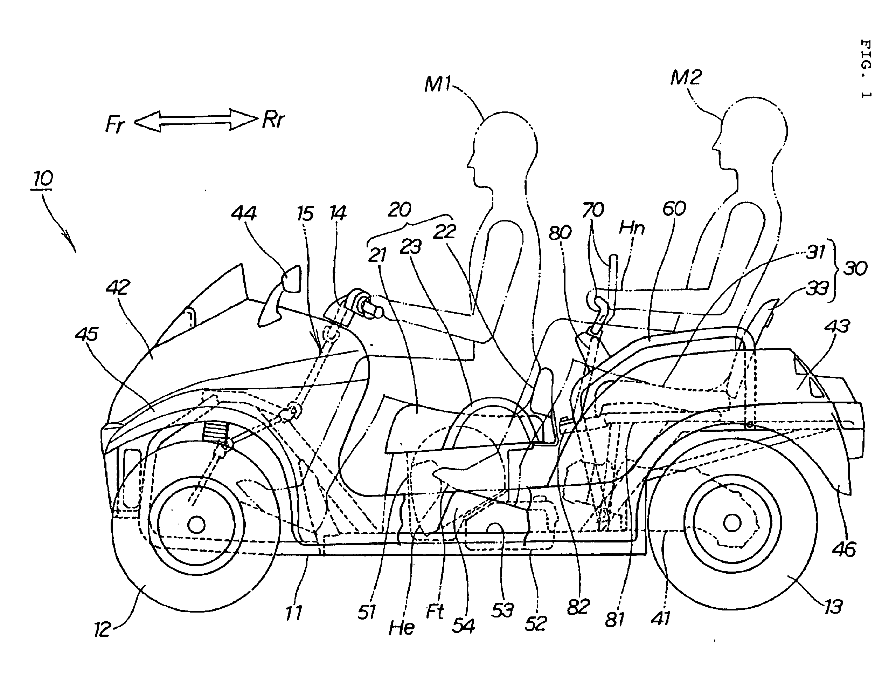

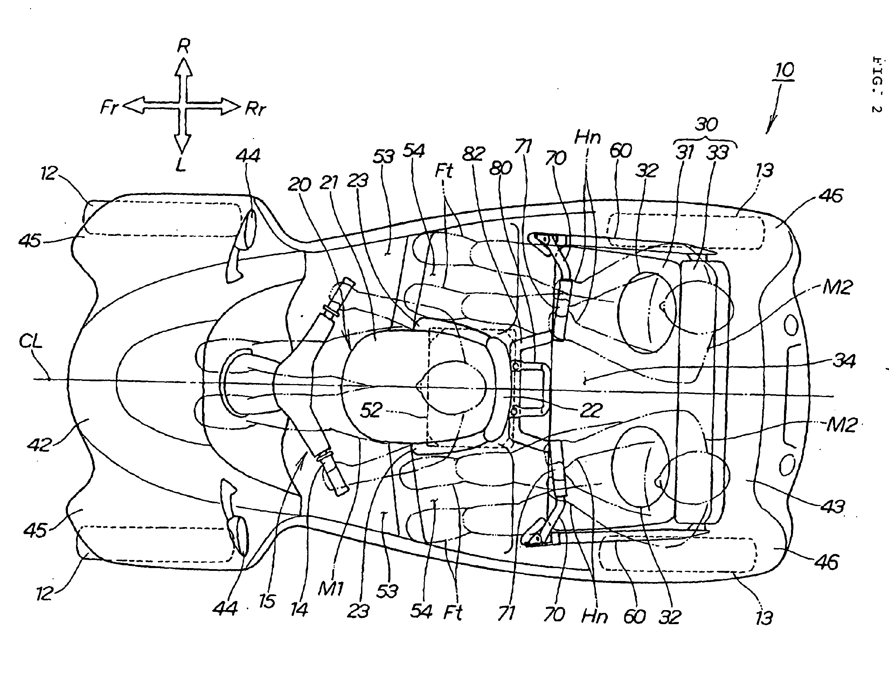

FIG. 1 is a left side elevational view showing a vehicle according to the present invention. FIG. 2 is a plan view showing the vehicle according to the present invention.
Referring to FIGS. 1 and 2, a vehicle 10 is a compact four-wheeled vehicle, or a light vehicle. The vehicle 10 includes a vehicle body (vehicle body frame) 11, right and left front wheels 12, 12, and right and left rear wheels 13, 13. The vehicle 10 includes a steering mechanism 15 such as a bar handle 14 type and includes a front portion seat 20 and a rear portion seat 30 mounted at a central portion of the vehicle body 11. The vehicle 10 further includes a power unit 41 located at a lower rear portion of the vehicle body 11. The vehicle 10 further includes a front cover 42 covering an area surrounding the vehicle body 11 and a rear cover 43 covering a rear portion of the vehicle body 11.
Further, reference numeral 44 represents a side mirror, reference numeral 45 represents a front fender, and reference numeral 46 represents a rear fender.

The vehicle 10 will be hereunder described in detail. In the vehicle 10, the rear portion seat 30, on which rear portion passengers M2, M2 sit, is disposed rearward of, and close to, the front portion seat 20, on which a rider M1 sits. A storage box 51 is disposed downward of the front portion seat 20. Further, a fuel tank 52 is disposed downward of the storage box 51.

The front portion seat 20 includes a seat cushion 21, a backrest (seat back portion) 22, and right and left side supports 23, 23. These parts are for the rider. The front portion seat 20 is vertically rotatable, functioning also as a lid closing an upper portion opening in the storage box 51. The storage box 51 can accommodate therein a helmet He and other luggage.
The front portion seat 20 has a seat height (hip point) slightly lower than that of the rear portion seat 30.

Referring to FIG. 2, the rear portion seat 30 is a wide seat having right and left seating portions 32, 32 on a seat cushion 31. The rear portion seat 30 also includes a backrest (seat back portion) 33 corresponding to the right and left seating portions 32, 32.
Accordingly, the rear portion seat 30 includes the pair of right and left seating portions 32, 32, each being offset rightward and leftward, respectively, relative to the front portion seat 20 disposed on a vehicle width centerline CL. The seat cushion 31 is of a substantially rectangular shape in a plan view thereof. The seat cushion 31 includes a flat central portion 34 between the right and left seating portions 32, 32 that are slightly indented. The wide rear portion seat 30 having the right and left seating portions 32, 32 allows the two rear portion passengers M2, M2 to sit thereon.
As shown in FIG. 1, the backrest 33 is inclined rearwardly. Specifically, the backrest 33 is not vertical and an upper end side of the backrest 33 is inclined rearwardly relative to a lower end side thereof.

Referring to FIGS. 1 and 2, the vehicle 10 further includes a pair of footrest portions 54, 54 for rear portion passengers disposed on a floor 53 on both sides of the front portion seat 20. Each of these footrest portions 54, 54 for rear portion passengers is a step, on which each of the rear portion passengers M2, M2 sitting on the rear portion seat 30 places their both feet Ft, Ft. The footrest portions 54, 54 are inclined upwardly toward the front.

As evident from the foregoing description, the vehicle 10 can run with the rider M1 sitting on the front portion seat 20 and the right and left rear portion passengers M2, M2 on the rear portion seat 30. Each of the rear portion passengers M2, M2 may lean slightly forward on the rear portion seat 30, stretching both feet Ft, Ft of each of the rear portion passengers M2, M2 in alignment with each other to a corresponding one of the two sides of the front portion seat 20 and placing the feet Ft, Ft on the footrest portions 54, 54 for rear portion passengers.
Referring to FIG. 2, the fuel tank 52 is disposed between the pair of the right and left footrest portions 54, 54 for rear portion passengers. This allows both sides of the fuel tank 52 to be protected by the footrest portions 54, 54 for rear portion passengers.

The vehicle 10 also includes a pair of side support members 60, 60 on corresponding sides of the rear portion seat 30. The vehicle 10 further includes a center grip 80 disposed between the front portion seat 20 and the rear portion seat 30.
The pair of side support members 60, 60 may, for example, be armrests on which the rear portion passengers M2, M2 can rest their arms. The side support members 60, 60 are removably mounted to a rear portion of the vehicle body frame 11 through bolting or the like. The side support members 60, 60 will hereunder be described in detail.

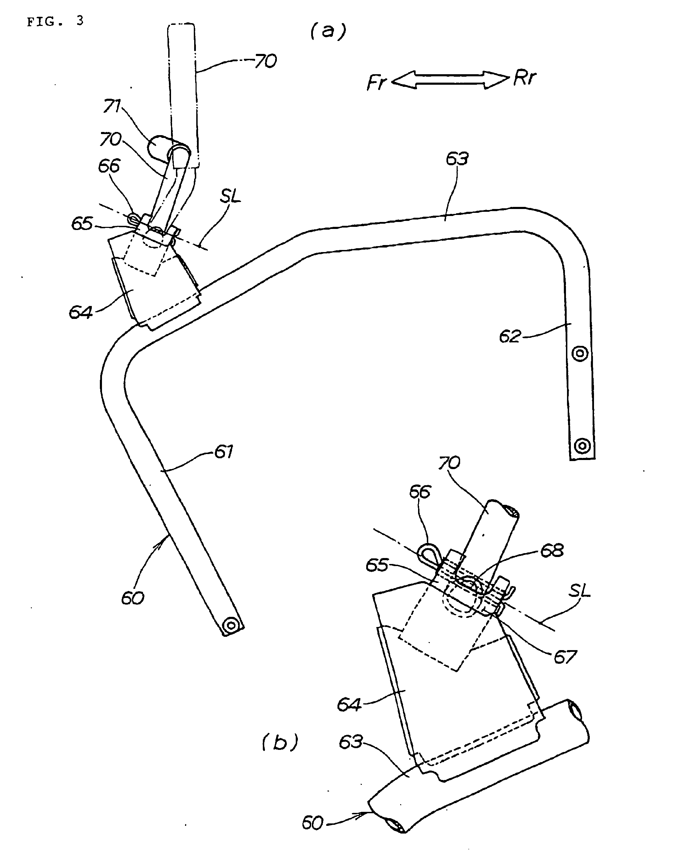

FIGS. 3A and 3B are views showing the structure of the left side support member according to the present invention. FIG. 3A is a view showing the structure of a side of the side support member 60. FIG. 3B is an enlarged view showing a principal portion of the side support member 60.

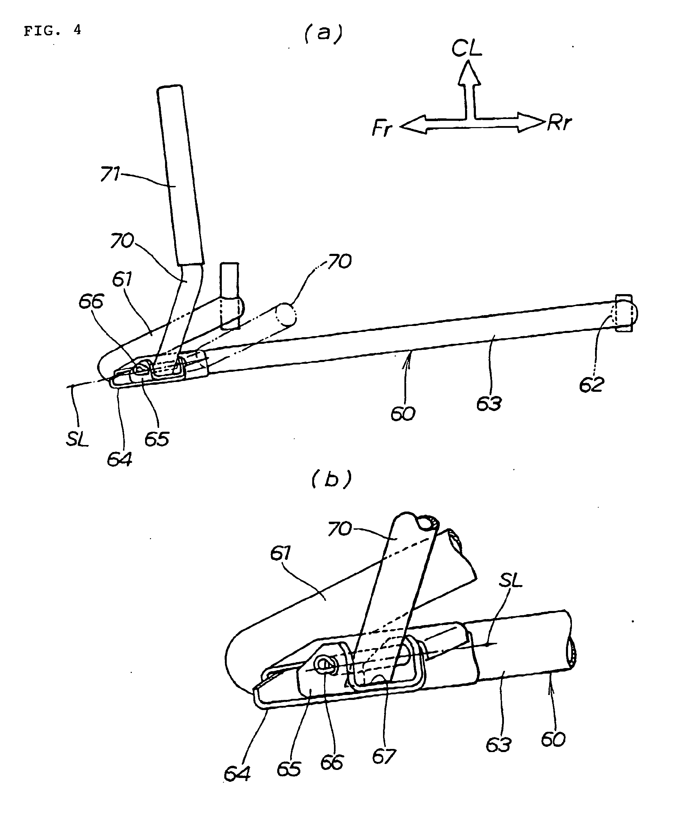

FIGS. 4A and 4B are plan views showing the structure of the left side support member according to the present invention. FIG. 4A is a plan view showing the structure of the side support member 60. FIG. 4B is an enlarged view showing a principal portion of the side support member 60.

Referring to FIGS. 3A, 3B, 4A, and 4B, the left side support member 60 is a member having substantially a gate shape in a side view. The left side support member 60 includes a front column support 61 standing upright, a rear column support 62, and an armrest portion 63 extending substantially horizontally across upper ends of the front column support 61 and the rear column support 62. The left side support member 60 thus structured further includes a left side grip 70 that can be raised and lowered so that the left side support member 60 can be extended inwardly the vehicle body (toward the vehicle width centerline CL).

More specifically, the following arrangements are provided for the left side support member 60. An upright portion 64 is extended upwardly from a front portion of the armrest portion 63. A bracket 65 is extended upwardly from an upper end portion of the upright portion 64. A proximal end of the left side grip 70 is rotatably mounted to the bracket 65 using a rotational shaft 66, such as a cotter pin or the like. That is, the side grip 70 can be raised and lowered about the rotational shaft 66 extending in the fore-aft direction. The rotational shaft 66 is inclined downwardly toward the rear. The centerline of the rotational shaft 66, that is, the rotational centerline of the side grip 70 will hereunder be referred to as "rotational centerline SL."

The side grip 70 extends upwardly relative to the rotational shaft 66 and a leading end of the side grip 70 further extends toward the vehicle width centerline CL, thus the side grip 70 being substantially L-shaped. There is also provided a grip portion 71 at the leading end portion of the side grip 70. The side grip 70 can therefore be lowered into (1) a use position or raised into (2) a non-use position. In the use position, the side grip 70 is extended substantially horizontally toward the inside of the vehicle as shown by a solid line. In the non-use position, the side grip 70 is in an upright position as shown by an imaginary line. Reference numeral 67 represents a stopper for the use position. Reference numeral 68 represents a stopper for the non-use position.

Various arrangements are possible for placing the side grip 70 into the use position and the non-use position. Examples of the arrangements include a first arrangement and a second arrangement to be described in the following. In any arrangement, sufficiently easy egress and ingress for the rear portion passenger M2 (see FIG. 1) can be ensured.

In the first arrangement, the bracket 65 includes a holding mechanism (also referred to as a click mechanism) that holds the side grip 70 with a predetermined holding force at the use position and the non-use position. In this case, the holding mechanism can be released by a lifting force or a lowering force of a predetermined value or more applied to the side grip 70. Accordingly, the side grip 70 can be raised or lowered arbitrarily.
In order to positively position the side grip 70 relative to the holding mechanism at the use position and the non-use position, a stopper that allows the range of raising and lowering between the use position and the non-use position to be arbitrarily adjusted may be provided. The side grip 70 can be positively held in position by the holding mechanism.

In the second arrangement, the bracket 65 includes an auto return mechanism that holds the side grip 70 at the use position using a predetermined snapping force. In this case, the side grip 70 can be raised to the non-use position by raising the grip portion 71 by hand. When the grip portion 71 is released, the side grip 70 is automatically returned to the original use position by the snapping force.

The side support members 60, 60 and the side grips 70, 70 shown in FIG. 2 are of opposite hand and the description of the right side support member 60 and the right side grip 70, being identified by the same reference numerals as those of the left side support member and the left side grip, will be omitted.

In operation, the right and left side grips 70, 70 will be described with reference to FIGS. 1, 2, and 5.

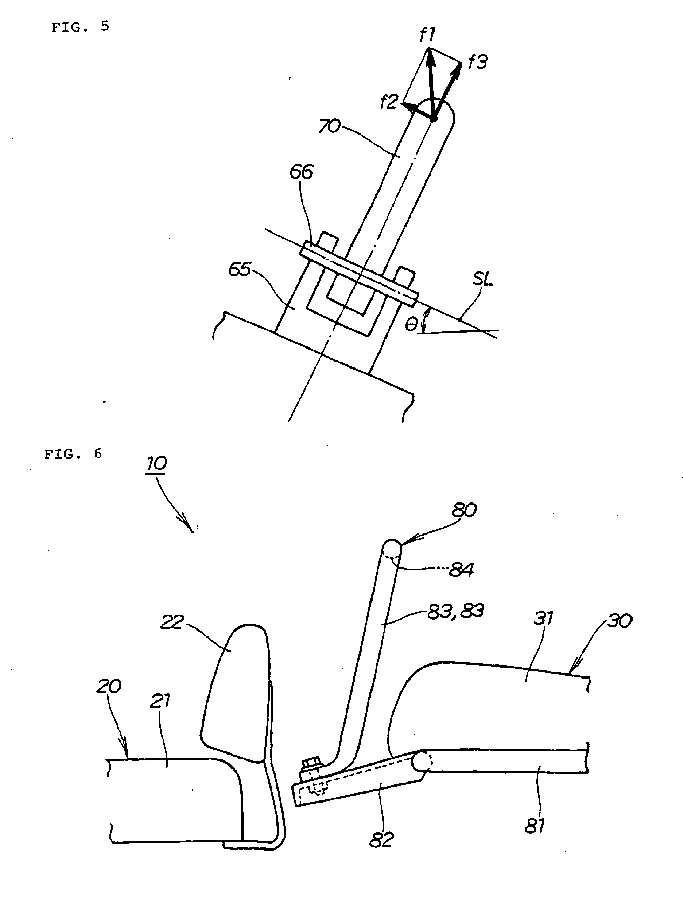

FIG. 5 is a view for explaining the operation of the side grip according to the present invention.
Referring to FIGS. 1 and 2, the side grips 70, 70 are provided so as to be raised and lowered so that the side grips 70, 70 are extendable toward the inside of the vehicle body relative to the right and left side support members 60, 60. Accordingly, the rear portion passengers M2, M2 sitting in the seating portions 32, 32 can grip the side grips 70, 70 in the lowered position with either or both of hands Hn, Hn of the rear portion passengers M2, M2, respectively. This helps the rear portion passengers M2, M2 maintain a good riding posture with the help of the side grips 70, 70 during sudden braking of the vehicle 10 or a related similar condition. Further, easy egress and ingress is secured for the rear portion passengers M2, M2, since the side grips 70, 70 can be raised.

Further, the rotational shafts 66, 66 (see FIG. 5) extending in the fore-aft direction for supporting the side grips 70, 70 are inclined downwardly toward the rear. The side grips 70, 70 are therefore raised rearwardly and upwardly by bodies of the rear portion passengers M2, M2 when the rear portion passengers M2, M2 get on the vehicle and move to the rear portion seat 30. This means that there is no need to raise the side grips 70, 70 into the non-use position by hand when the rear portion passengers M2, M2 get on the vehicle. Consequently, despite the provision of the side grips 70, 70, extremely ingress is secured for the rear portion passengers M2, M2.

Referring to FIG. 5, again, the rotational shaft 66 of the side grip 70 is inclined downwardly toward the rear. If an upward thrust load f1 acts from below on the side grip 70 extending toward the inside of the vehicle body, the upward thrust load f1 can be dispersed for an inclined angle θ of the rotational shaft 66.
Specifically, the upward thrust load f1 in a vertical direction is divided into two orthogonal component forces, one being a component f2 that runs in parallel with the rotational shaft 66, while the other being a component f3 that runs perpendicularly relative to the rotational shaft 66. In order for the side grip 70 to be raised, the component f3 must exceed a predetermined holding force.
As a result, the side grip 70 can be raised only with an even greater upward thrust load f1. Accordingly, the side grip 70 can be easily prevented from being moved upward by the upward thrust load f1.

In operation, the backrest 33 of the rear portion seat 30 and the footrest portions 54, 54 for rear portion passengers will be described with reference to FIGS. 1 and 2.
Referring to FIGS. 1 and 2, the backrest 33 of the rear portion seat 30 is inclined rearwardly. The posture of the rear portion passengers M2, M2 sitting on the rear portion seat 30 can therefore be inclined slightly rearwardly when the rear portion passengers M2, M2 lean against the backrests 33. Consequently, the rear portion passengers M2, M2 can be even further prevented from moving forward.

In addition, the footrest portions 54, 54 for rear portion passengers disposed on the corresponding sides of the front portion seat 20 are inclined upwardly toward the front. This allows the rear portion passengers M2, M2 to plant their feet Ft, Ft firmly during sudden braking of the vehicle 10 or a similar situation. Accordingly, the rear portion passengers M2, M2 can be prevented from moving forward even more positively. Further, the riding posture of the rear portion passengers M2, M2 can be retained even more stably.

Referring to FIGS. 1 and 2, the vehicle 10 is characterized in that the center grip 80 is disposed between the front portion seat 20 and the rear portion seat 30. The center grip 80 will be described in detail in the following.
FIG. 6 is a view showing the structure of the center grip 80 according to the present invention. FIG. 6 shows an area around the center grip 80 as viewed from the left as in FIG. 1.

Referring to FIGS. 1, 2, and 6, the vehicle 10 includes a seat frame 81 for supporting the rear portion seat 30, mounted in the rear portion of the vehicle body frame 11. A stay 82 is extended forwardly from a front end of the seat frame 81. A proximal end of the center grip 80 is removably attached to a front end of the stay 82 using a bolt or the like and a leading end of the center grip 80 is extended upwardly.
The center grip 80 includes right and left column supports 83, 83 standing upright from the stay 82, and a grip portion 84 that extends substantially horizontally across upper ends of the column supports 83, 83. The center grip 80 is thus shaped substantially like a gate as viewed from the front.

As described in the foregoing, the center grip 80 is disposed between the front portion seat 20 and the rear portion seat 30. Accordingly, even if a passenger of a small figure, such as a child or the like, sits on the central portion 34 of the rear portion seat 30, the passenger can grip the center grip 80 disposed before the rear portion seat 30. Consequently, the riding posture of the passenger can be stably retained with the center grip 80.

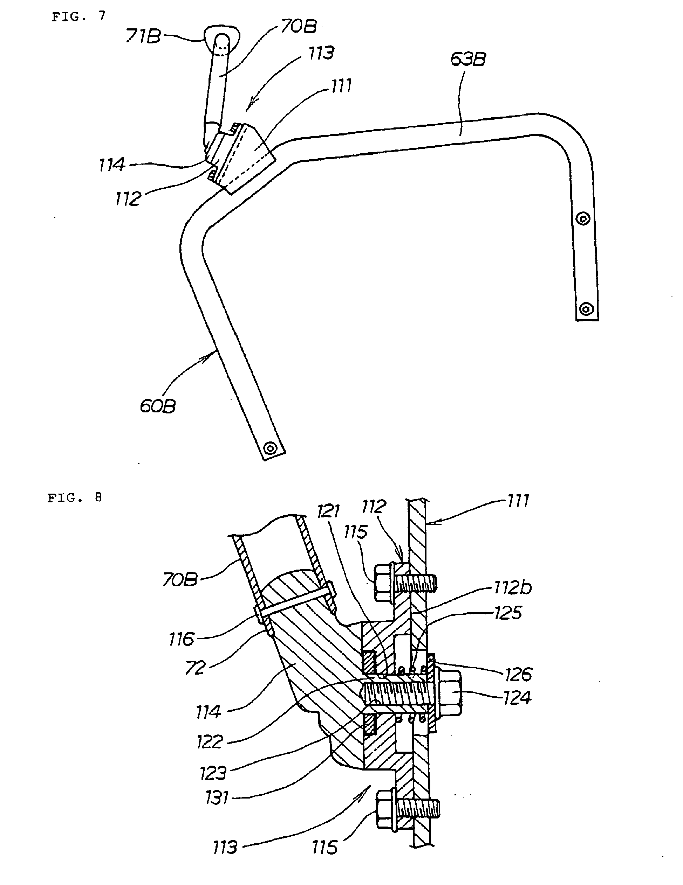

FIG. 7 is a view showing another embodiment of the embodiment shown in FIG. 3. A side support member 60B includes an armrest portion 63B forming an upper portion of the side support member 60B and a side grip 70B. Specifically, a bracket 111 is extended from a front portion of the armrest portion 63B. A side grip support portion 113 is mounted on the bracket 111. The side grip 70B is fitted to the side grip support portion 113. FIG. 7 shows a condition, in which the side grip 70B is extended inwardly the vehicle body.
The structure of the side grip support portion 113 will be described in detail with reference to FIG. 8.

FIG. 8 is a cross sectional view showing the side grip support portion shown in FIG. 7. The side grip support portion 113 includes a first base member 112 as a fixed side member and a second base member 114 as a swing side member. More specifically, the first base member 112 is mounted to the bracket 111 using bolts 115, 115. The second base member 114 is swingably mounted to the first base member 112. The side grip 70B is then mounted to the second base member 114 using a pin member 116.

The first base member 112 is provided with a through hole 121. A shaft 122 of the second base member 114 is inserted into this through hole 121. A shaft retaining coil spring 125 and a washer member 126 are fitted over the shaft 122 from a direction opposite to a direction in which the shaft 122 is inserted. A support bolt 124 is screwed into a threaded hole 123 drilled at a center of the shaft 122, thereby making the washer member 126 abut on the shaft 122. The second base member 114 is thereby rotatably mounted relative to the bracket 111 and the first base member 112.

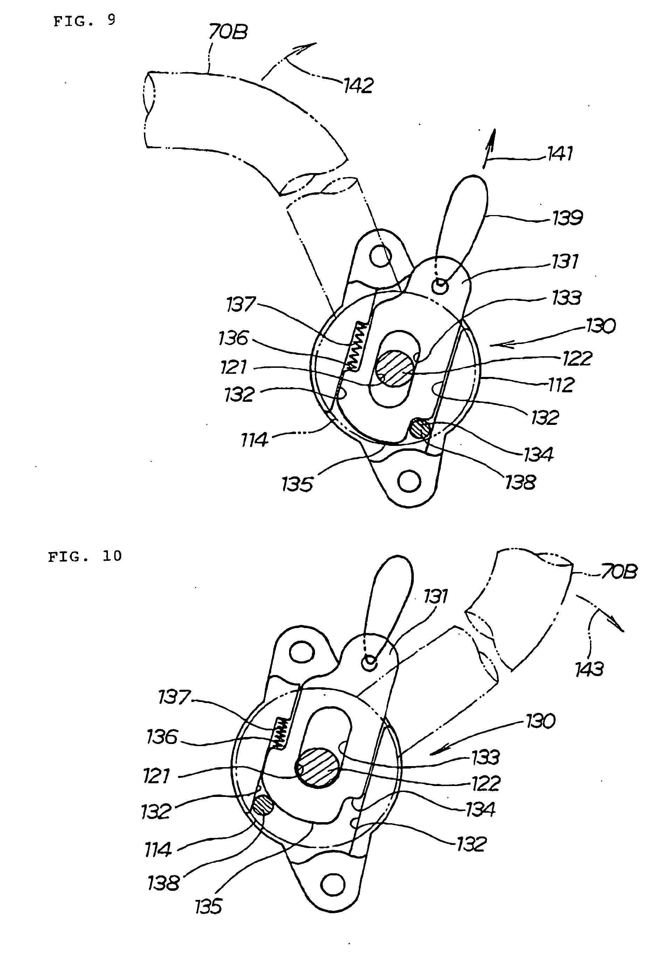

There is provided a locking member 131 that allows a protruded portion 138 (see FIG. 9) included in the second base member 114 to be locked. The locking member 131 is clamped between the first base member 112 and the second base member 114. The second base member 114 is lockable relative to the first base member 112 by inserting or removing the locking member 131 from the front side to the backside of FIG. 8 on both sides of the shaft 122.

In other words, the side grip support portion 113 is formed by the second base member 114 mounted swingably on the first base member 112 for supporting the side grip 70B.
According to the embodiment of the present invention, the bracket 111 is substantially L-shaped. The bracket 111 may nonetheless be laterally-facing U-shaped or shaped arbitrarily. A locking mechanism 130 in the side grip support portion 113 will be described in detail with reference to FIG. 9.

FIG. 9 is a view for explaining a locking mechanism of the side grip support portion shown in FIG. 7 and an operation thereof (for starting the operation of raising the side grip).
A locking mechanism 130 of the side grip 70B includes as major elements thereof the first base member 112, the locking member 131, a slot 133, a stopper portion 134, an abut portion 135, an urged portion 136, the shaft 122, and the protruded portion 138. More specifically, the locking member 131 is slidably mounted along both side walls 132, 132 of the first base member 112. The locking member 131 is provided with the slot 133. The stopper portion 134 is provided on an outer periphery of the locking member 131. The abut portion 135 is formed as a continuation from the stopper portion 134. The urged portion 136 is urged by an elastic member 137. The shaft 122 is disposed at the center of the second base member 114. The shaft 122 passes through the slot 133 and fits into the through hole 121 in the first base member 112. The protruded portion 138 is provided on the second base member 114, offset from the center of the shaft 122. The protruded portion 138 is capable of making a reciprocating motion between the stopper portion 134 of the locking member 131 and the abut portion 135 of the locking member 131.
According to the embodiment of the present invention, the elastic member 137 is a coil spring. The coil spring may of course be replaced by another elastic member, such as a rubber or plastic bushing.

In other words, the side grip 70B is rotatably supported on the first base member 112 included in the side support member 60B (see FIG. 7). Further, the second base member 114 disposed at a base portion 72 of the side grip 70B is lockable relative to the first base member 112.
In addition, the second base member 114 is swingably journaled on the first base member 112 via the shaft 122 (see FIG. 8).

Further, the elastic member 137 is interposed between the locking member 131 and the first base member 112. The locking member 131 is supported on the shaft 122 via the slot 133. The locking member 131 is also supported on the side walls 132, 132 included in the first base member 112, movable along the side walls 132, 132.

When the side grip 70B is to be raised, a force is applied by means of a pulling member 139 to the locking member 131 in the direction of an arrow 141. The locking member 131 is thereby slid until the protruded portion 138 is located at a position, at which the protruded portion 138 can abut on the abut portion 135. The protruded portion 138 is thus unlocked from the stopper portion 134 included in the locking member 131. In this unlocked position, the side grip 70B can now be rotated in the direction of an arrow 142 and raised.

As described in the foregoing, the second base member 114 is lockable relative to the first base member 112. Accordingly, if an arrangement is made to make the side grip 70B lockable when lowered inwardly, the side grip 70B can be stably retained in the inwardly lowered condition.

While being swingable, the protruded portion 138 of the second base member 114 is lockable by the locking member 131. Locking and unlocking of the side grip 70B can be accomplished by disposing the protruded portion 138 at a preferable position relative to the locking member 131 and devising the shape of the locking member 131.

FIG. 10 is a view for explaining the locking mechanism of the side grip support portion shown in FIG. 7 and an operation thereof (for completing the operation of raising the side grip).
The locking member 131 is urged by the elastic member 137. Accordingly, the protruded portion 138 included in the second base member 114 is brought into abutment on the abut portion 135 of the locking member 131. Further, it is arranged that the protruded portion 138 contacts the side wall 132 of the first base member 112. Motion of the side grip 70B can therefore be restricted so that the side grip 70B does not rotate through a predetermined angle or more in the direction of an arrow 143.

In operation, the side grip 70B is lowered from the raised position as follows. Specifically, moving the side grip 70B in the direction opposite to the arrow 143 by applying a force thereto causes the protruded portion 138 of the second base member 114 to move along, and in abutment against, the abut portion 135 included in the locking member 131.
Continuing further to lower the side grip 70B will cause the elastic member 137 to urge the urged portion 136. This moves the protruded portion 138 from the abut portion 135 to the stopper portion 134, allowing the side grip 70B to be locked in position. This position is illustrated in FIG. 9.

The elastic member 137 interposed between the locking member 131 and the first base member 112 urges the locking member 131 which, in turn, urges the protruded portion 138 of the second base member 114. This arrangement allows urge to the protruded portion 138 of the second base member 114 to be released, thus unlocking the side grip 70B, only when the locking member 131 is pulled with the side grip 70B at the lowered position.

The arrangement, in which the side grip 70B is unlocked only when the locking member 131 is pulled with the side grip 70B lowered, permits positive locking operation, while maintaining good operability of the side grip 70B.

The locking member 131 is supported on the shaft 122 via the slot 133. The locking member 131 is also supported on the side walls 132, 132 included in the first base member 112, movable along the side walls 132, 132. This arrangement allows the locking member 131 to be moved smoothly.
The arrangement permitting the locking member 131 to move smoothly makes it even easier to perform locking and unlocking operations of the side grip 70B.

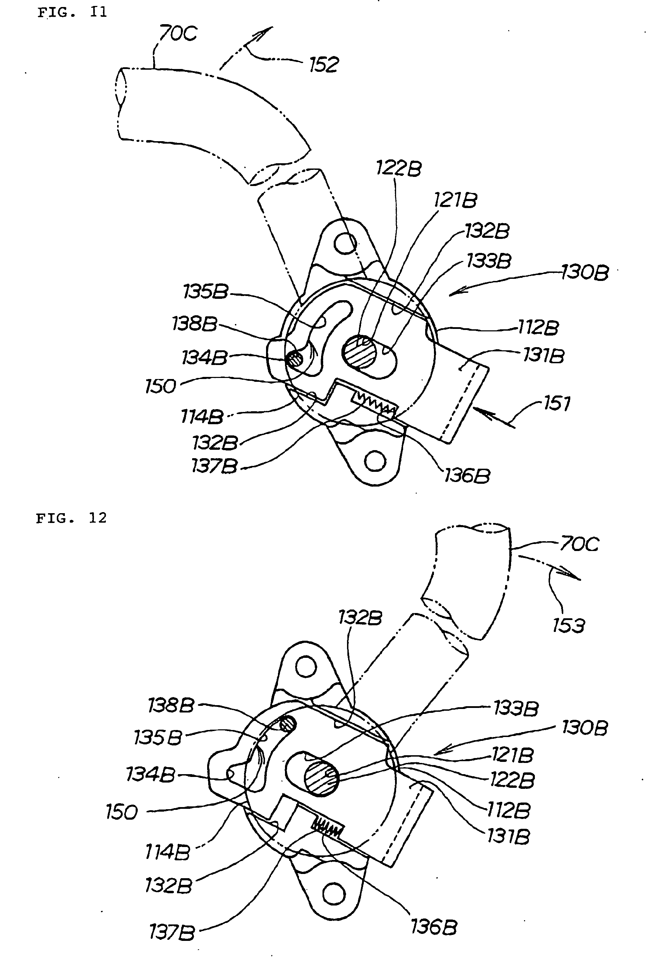

FIG. 11 is a view showing another embodiment of the embodiment shown in FIG. 9.
A locking mechanism 130B of a side grip 70C includes as major elements thereof a first base member 112B, a locking member 131B, a slot 133B, a guide hole 150, a stopper portion 134B, an abut portion 135B, an urged portion 136B, a shaft 122B, and a protruded portion 138B. More specifically, the locking member 131B is slidably mounted along both side walls 132B, 132B of the first base member 112B. The locking member 131B is provided with the slot 133B, and the guide hole 150 for guiding the protruded portion 138B. The stopper portion 134B is provided in the guide hole 150. The abut portion 135B is formed as a continuation from the stopper portion 134B. The urged portion 136B is urged by an elastic member 137B. The shaft 122B is disposed at the center of a second base member 114B. The shaft 122B passes through the slot 133B and fits into a through hole 121B in the first base member 112B. The protruded portion 138B is provided on the second base member 114B, offset from the center of the shaft 122B. The protruded portion 138B is capable of making a reciprocating motion between the stopper portion 134B of the locking member 131B and the abut portion 135B of the locking member 131B.

Further, the elastic member 137B is interposed between the locking member 131B and the first base member 112B. The locking member 131B is supported on the side walls 132B, 132B included in the first base member 112B, movable along the side walls 132B, 132B.

When the side grip 70C is to be raised, a force is applied by pushing the locking member 131B in the direction of an arrow 151. The locking member 131B is thereby slid until the protruded portion 138B is located at a position, at which the protruded portion 138B can abut on the abut portion 135B. The protruded portion 138B is thus unlocked from the stopper portion 134B included in the locking member 131B. In this unlocked position, the side grip 70C can now be rotated in the direction of an arrow 152 and raised.

FIG. 12 is a view showing another embodiment of the embodiment shown in FIG. 10.
The locking member 131B is urged by the elastic member 137B. Accordingly, the protruded portion 138B included in the second base member 114B is brought into abutment on the abut portion 135B of the locking member 131B.

In operation, the side grip 70C is lowered from the raised position as follows. Specifically, moving the side grip 70C in the direction opposite to an arrow 153 by applying a force thereto causes the protruded portion 138B of the second base member 114B to move along, and in abutment against, the abut portion 135B included in the locking member 131B.
Continuing further to lower the side grip 70C will cause the elastic member 137B to urge the urged portion 136B. This moves the protruded portion 138B from the abut portion 135B to the stopper portion 134B, allowing the side grip 70C to be locked in position. This position is illustrated in FIG. 11.

The elastic member 137B interposed between the locking member 131B and the first base member 112B urges the locking member 131B which, in turn, urges the protruded portion 138B of the second base member 114B. This arrangement allows urge to the protruded portion 138B of the second base member 114B to be released, thus unlocking the side grip 70C, only when the locking member 131B is pushed with the side grip 70C at the lowered position.

The arrangement, in which the side grip 70C is unlocked only when the locking member 131B is pushed with the side grip 70C lowered, permits positive locking operation, while maintaining good operability of the side grip 70C.

The locking member 131B is supported on the shaft 122B via the slot 133B. The locking member 131B is also supported on the side walls 132B, 132B included in the first base member 112B, movable along the side walls 132B, 132B. This arrangement allows the locking member 131B to be moved smoothly.
The arrangement permitting the locking member 131B to move smoothly makes it even easier to perform locking and unlocking operations of the side grip 70C.

### [Industrial Applicability]

The vehicle according to the present invention is particularly preferable for a three-wheeled vehicle or a four-wheeled vehicle having the rear portion seat 30 disposed rearward of the front portion seat 20, and the rear portion seat 30 including the seating portions 32, 32 offset sideways relative to the front portion seat 20.

10: Vehicle
20: Front portion seat
30: Rear portion seat
32: Seating portion of rear portion seat
33: Backrest of rear portion seat
52: Fuel tank
54: Footrest portion for rear portion passenger
60, 60B: Side support member
66: Rotational shaft of side grip
70, 70B, 70C: Side grip
80: Center grip
112, 112B: First base member
114, 114B: Second base member
122, 122B: Shaft of second base member
131, 131B: Locking member
132, 132B: Both side walls of first base member
133, 133B: Both side walls of locking member
137, 137B: Elastic member
138, 138B: Protruded portion of second base member M2: Rear portion passenger

## Claims

1. A vehicle, comprising:
a front portion seat (20); and
a rear portion seat (30) disposed rearward of the front portion seat (20), the rear portion seat (30) including a seating portion offset sideways relative to the front portion seat (20);
wherein the rear portion seat (30) includes a side support member (60) disposed on a side of the rear portion seat (30) ; and **characterized in that**
the side support member (60) includes a side grip (70) capable of being raised or lowered so as to be extendable inwardly a vehicle body.

2. The vehicle according to claim 1,
wherein the side grip (70) is rotatably supported on a first base member (112) disposed in the side support member (60); and
wherein a second base member (114) disposed in a base portion of the side grip (70) is lockable relative to the first base member (112).

3. The vehicle according to claim 2,
wherein the second base member (114) is swingably journaled via a shaft on the first base member (112); and
wherein a locking member (131) capable of locking a protruded portion included in the second base member (114) is clamped between the first base member (112) and the second base member (114).

4. The vehicle according to claim 3,
wherein an elastic member (137) is interposed between the locking member (131) and the first base member (112).

5. The vehicle according to claim 3 or 4,
wherein the locking member (131) is supported on the shaft via a slot and supported on both side walls (132) included in the first base member (112) so as to be movable along the both side walls (132).

6. The vehicle according to any of the preceding claims,
wherein the side grip (70) is raised or lowered about a rotational shaft (66) that is inclined downwardly toward a rear.

7. The vehicle according to any of the preceding claims,
wherein the rear portion seat (30) includes a backrest that is inclined rearwardly.

8. The vehicle according to any of the preceding claims, further comprising:
a footrest portion for a rear portion passenger (M2), on which the rear portion passenger (M2) sitting on the rear portion seat (30) places feet, disposed on a side of the front portion seat (70);
wherein the footrest portion for the rear portion passenger (M2) is inclined upwardly toward a front.

9. The vehicle according to any of the preceding claims,
wherein the footrest portion for the rear portion passenger (54) is provided as a pair of right and left footrest portions; and
wherein a fuel tank (52) is disposed between the pair of the footrest portions for rear portion passengers (54).

10. The vehicle according to any of the preceding claims, further comprising:
a center grip (80) disposed between the front portion seat (20) and the rear portion seat (30).

## Patentansprüche

1. Fahrzeug, das aufweist:
einen Vordersitz (20); und
einen Rücksitz (30), der hinter dem Vordersitz (20) angeordnet ist, wobei der Rücksitz (30) einen Sitzflächenabschnitt umfasst, der relativ zu dem Vordersitz (20) seitwärts versetzt ist;
wobei der Rücksitz (30) ein seitliches Halteelement (60) umfasst, das auf einer Seite des Rücksitzes (30) angeordnet ist; und
**dadurch gekennzeichnet, dass**
das seitliche Halteelement (60) einen Seitengriff (70) umfasst, der fähig ist, erhöht oder gesenkt zu werden, um von einem Fahrzeugkörper einwärts ausziehbar zu sein.

2. Fahrzeug gemäß Anspruch 1,
wobei der Seitengriff (70) auf einem ersten Basiselement (112), das in dem seitlichen Haltelement (60) angeordnet ist, drehbar gehalten ist; und
wobei ein zweites Basiselement (114), das in einem Basisabschnitt des Seitengriffs (70) angeordnet ist, relativ zu dem ersten Basiselement (112) verriegelbar ist.

3. Fahrzeug gemäß Anspruch 2,
wobei das zweite Basiselement (114) über eine Welle auf dem ersten Basiselement (112) schwingbar gelagert ist; und
wobei ein Verriegelungselement (131), das fähig ist, einen in dem zweiten Basiselement (114) enthaltenen vorstehenden Abschnitt zu verriegeln, zwischen dem ersten Basiselement (112) und dem zweiten Basiselement (114) eingeklemmt ist.

4. Fahrzeug gemäß Anspruch 3,
wobei ein elastisches Element (137) zwischen dem Verriegelungselement (131) und dem ersten Basiselement (112) eingefügt ist.

5. Fahrzeug gemäß Anspruch 3 oder 4,
wobei das Verriegelungselement (131) über einen Schlitz auf der Welle gehalten ist und auf beiden Seitenwänden (132), die in dem ersten Basiselement (112) enthalten sind, gehalten ist, um entlang der beiden Seitenwände (132) bewegbar zu sein.

6. Fahrzeug gemäß einem der vorhergehenden Ansprüche,
wobei der Seitengriff (70) um einen Drehwelle (66) erhöht oder gesenkt wird, der nach hinten abwärts geneigt ist.

7. Fahrzeug gemäß einem der vorhergehenden Ansprüche,
wobei der Rücksitz (30) eine Rückenlehne umfasst, die nach hinten geneigt ist.

8. Fahrzeug gemäß einem der vorhergehenden Ansprüche, das ferner aufweist:
einen Fußstützenabschnitt für einen Fahrgast (M2) im hinteren Abschnitt, auf dem ein Fahrgast (M2) im hinteren Abschnitt, der auf dem Rücksitz (30) sitzt,
die Füße platziert, welcher auf einer Seite des Vordersitzes (70) angeordnet ist;
wobei der Fußstützenabschnitt für den Fahrgast (M2) im hinteren Abschnitt nach vorne aufwärts geneigt ist.

9. Fahrzeug gemäß einem der vorhergehenden Ansprüche,
wobei der Fußstützenabschnitt (54) für den Fahrgast im hinteren Abschnitt als ein Paar rechter und linker Fußstützenabschnitte bereitgestellt ist; und wobei ein Brennstoffbehälter (52) zwischen dem Paar von Fußstützenabschnitten (54) für Fahrgäste im hinteren Abschnitt angeordnet ist.

10. Fahrzeug gemäß einem der vorhergehenden Ansprüche, das ferner aufweist:
einen zentralen Griff (80), der zwischen dem Vordersitz (20) und dem Rücksitz (30) angeordnet ist.

## Revendications

1. Véhicule, comprenant :
un siège de partie avant (20) ; et
un siège de partie arrière (30) disposé à l'arrière du siège de partie avant (20), le siège de partie arrière (30) comprenant une partie de siège décalée latéralement par rapport au siège de partie avant (20) ;
dans lequel le siège de partie arrière (30) comprend un élément de support latéral (60) disposé sur un côté du siège de partie arrière (30) ; et **caractérisé en ce que**
l'élément de support latéral (60) comprend une poignée latérale (70) capable d'être levée ou baissée afin d'être extensible vers l'intérieur d'une carrosserie de véhicule.

2. Véhicule selon la revendication 1,
dans lequel la poignée latérale (70) est supportée de façon rotative sur un premier élément de base (112) disposé dans l'élément de support latéral (60) ; et
dans lequel un second élément de base (114) disposé dans une partie de base de la poignée latérale (70) peut être verrouillé par rapport au premier élément de base (112).

3. Véhicule selon la revendication 2,
dans lequel le second élément de base (114) est supporté de façon pivotante par l'intermédiaire d'un arbre sur le premier élément de base (112) ; et
dans lequel un élément de verrouillage (131) capable de verrouiller une partie en saillie incluse dans le second élément de base (114) est serré entre le premier élément de base (112) et le second élément de base (114).

4. Véhicule selon la revendication 3, dans lequel un élément élastique (137) est interposé entre l'élément de verrouillage (131) et le premier élément de base (112).

5. Véhicule selon la revendication 3 ou 4,
dans lequel l'élément de verrouillage (131) est supporté sur l'arbre par l'intermédiaire d'une fente et supporté sur deux parois latérales (132) incluses dans le premier élément de base (112) afin d'être mobile le long des deux parois latérales (132).

6. Véhicule selon une quelconque des revendications précédentes,
dans lequel la poignée latérale (70) est levée ou baissée sur un arbre de rotation (66) qui est incliné vers le bas vers l'arrière.

7. Véhicule selon une quelconque des revendications précédentes,
dans lequel le siège de partie arrière (30) comprend un dossier qui est incliné vers l'arrière.

8. Véhicule selon une quelconque des revendications précédentes, comprenant en outre :
une partie de repose-pied pour un passager de partie arrière (M2), sur laquelle le passager de partie arrière (M2) assis sur le siège de partie arrière (30) place les pieds, disposée sur un côté du siège de partie avant (70) ;
dans lequel la partie de repose-pied pour le passager de partie arrière (M2) est inclinée vers le haut vers l'avant.

9. Véhicule selon une quelconque des revendications précédentes,
dans lequel la partie de repose-pied pour le passager de partie arrière (54) est prévue sous forme de paire de parties de repose-pied droite et gauche ; et
dans lequel un réservoir de carburant (52) est disposé entre la paire des parties de repose-pied pour les passagers de partie arrière (54).

10. Véhicule selon une quelconque des revendications précédentes, comprenant en outre
une poignée centrale (80) disposée entre le siège de partie avant (20) et le siège de partie arrière (30).
